# EUROPÄISCHE PATENTANMELDUNG

(11) **EP 4 375 716 A1**
(43) Veröffentlichungstag der Anmeldung: **29.05.2024**
(21) Anmeldenummer: 22209273.6
(22) Anmeldetag: 24.11.2022
(51) Int. Cl.: G01V 8/20, G01V 8/22

(54) **LICHTVORHANG**

(71) Anmelder: Leuze electronic GmbH + Co. KG, 73277 Owen/Teck (DE)
(72) Erfinder: Olbrich, Sebastian, 80992 München (DE); Heckmayr, Alexander, 86807 Buchloe (DE); Hartl, Paul, 80797 München (DE); Feller, Bernhard, 86316 Friedberg (DE); Auer, Robert, 85540 Haar (DE)
(74) Vertreter: Ruckh, Rainer Gerhard

(57) **Zusammenfassung**

Die Erfindung betrifft einen Lichtvorhang (1) zur Erfassung von Objekten in einem Überwachungsbereich, mit einer Anordnung von Lichtstrahlen (3) emittierenden Sendern (4a-4d) und einer Anordnung von Lichtstrahlen (3) empfangenden Empfängern (6). Jedem Sender (4a-4d) ist ein Empfänger (6) derart zugeordnet, dass bei freiem Überwachungsbereich die Lichtstrahlen (3) des zugeordneten Senders (4a-4d) auf diesen Empfänger (6) treffen. Bei einem Objekteingriff sind die Lichtstrahlen (3) wenigstens eines Senders (4a-4d) zumindest teilweise unterbrochen. Weiterhin ist eine Auswerteeinheit (8) zur Generierung eines Objektfeststellungssignals in Abhängigkeit von an den Ausgängen der Empfänger (6) anstehenden Empfangssignalen vorhanden. Als Mittel zur Ansteuerung und Adressierung der Sender (4a-4d) sind eine Steuereinheit (7a) und eine Schieberegisterkette (9) mit Schieberegisterelementen (10a-10d), welchen jeweils wenigstens ein Sender (4a-4d) zugeordnet ist, vorhanden. Jeweils ein Schieberegisterelement (10a-10d) ist über den diesem zugeordneten Sender (4a-4d) oder eine Beschaltung dieses Senders (4a-4d) mit dem nächsten Schieberegisterelement (10a-10d) verkettet.

## Beschreibung

Die Erfindung betrifft einen Lichtvorhang gemäß dem Oberbegriff des Anspruchs 1.

Derartige Lichtvorhänge dienen zur Erfassung von Objekten in einem Überwachungsbereich. Typischerweise umfasst ein derartiger Lichtvorhang eine Sendereinheit mit einer Anordnung von Lichtstrahlen emittierenden Sendern an einem Rand des Überwachungsbereichs und einer Empfängereinheit mit einer Anordnung von Lichtstrahlen empfangenden Empfängern am gegenüberliegenden Rand des Überwachungsbereichs. Jedem Sender ist ein Empfänger zugeordnet, sodass bei freiem Überwachungsbereich dessen Lichtstrahlen ungehindert auf den zugeordneten Empfänger trifft. Bei einem Objekteingriff ist wenigstens einer der Lichtstrahlen unterbrochen. In einer Auswerteeinheit wird in Abhängigkeit der Empfangssignale ein Objektfeststellungssignal generiert, welches angibt, ob im Überwachungsbereich ein Objekt vorhanden ist oder nicht.

Eine wesentliche Anforderung bei der Herstellung der Lichtvorhänge besteht darin, bei hoher Funktionalität des Lichtvorhangs dessen Herstellkosten so gering wie möglich zu halten.

Aus der EP 3 483 636 A1 ist ein Lichtvorhang gemäß dem Oberbegriff des Anspruchs 1 bekannt. Dieser Lichtvorhang dient zur Erfassung von Objekten in einem Überwachungsbereich und umfasst eine Anordnung von Lichtstrahlen emittierenden Sendern und eine Anordnung von Lichtstrahlen empfangenden Empfängern, wobei jedem Sender ein Empfänger derart zugeordnet ist, dass bei freiem Überwachungsbereich die Lichtstrahlen des zugeordneten Senders auf diesen Empfänger treffen. Bei einem Objekteingriff sind die Lichtstrahlen wenigstens eines Senders zumindest teilweise unterbrochen. In einer Auswerteeinheit wird ein Objektfeststellungssignal in Abhängigkeit von an den Ausgängen der Empfänger anstehenden Empfangssignalen generiert. Jedem Sender ist ein Flip-Flop mit einer Tristate-Logik zugeordnet ist, wobei an die Ausgänge der Flip-Flops anschließende Ausgangsbeschaltungen mit einem Output-Enable-Eingang verbunden sind, und wobei mittels eines Flip-Flops ein Sender adressierbar ist. Der Lichtvorhang umfasst eine Steuereinheit, welche an die Eingänge der Flip-Flops und den Output-Enable-Eingang angeschlossen ist, wobei ein adressierter Sender dadurch aktiviert ist, dass der Ausgang des zugeordneten Flip-Flops niederohmig geschaltet ist und ein Modulationssignal am Output-Enable Eingang angelegt wird. Die Modulationssignale bilden Steuersignale, mittels derer Informationen eines Flip-Flops zu wenigstens einem weiteren Flip-Flop weitergebbar sind, wobei nach einer Flanke eines in der Steuereinheit generierten und dem jeweiligen Flip-Flop am Eingang zugeführten Clocksignals die Dauer der die Steuersignale bildenden Modulationssignale so kurz ist, dass mit diesen keine Lichtpulse generiert werden.

Der Erfindung liegt die Aufgabe zugrunde einen Lichtvorhang bereitzustellen, welcher bei konstruktiv einfachem Aufbau eine hohe Funktionssicherheit aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen Lichtvorhang zur Erfassung von Objekten in einem Überwachungsbereich, mit einer Anordnung von Lichtstrahlen emittierenden Sendern und einer Anordnung von Lichtstrahlen empfangenden Empfängern. Jedem Sender ist ein Empfänger derart zugeordnet, dass bei freiem Überwachungsbereich die Lichtstrahlen des zugeordneten Senders auf diesen Empfänger treffen. Bei einem Objekteingriff sind die Lichtstrahlen wenigstens eines Senders zumindest teilweise unterbrochen. Mit einer Auswerteeinheit wird ein Objektfeststellungssignal in Abhängigkeit von an den Ausgängen der Empfänger anstehenden Empfangssignalen generiert. Als Mittel zur Ansteuerung und Adressierung der Sender ist eine Steuereinheit und eine Schieberegisterkette mit Schieberegisterelementen vorhanden, welchen jeweils wenigstens ein Sender zugeordnet ist. Jeweils ein Schieberegisterelement ist über den diesem zugeordneten Sender oder eine Beschaltung dieses Senders mit dem nächsten Schieberegisterelement verkettet.

Der erfindungsgemäße Lichtvorhang arbeitet nach dem Lichtschrankenprinzip und dient generell zur Erfassung von Objekten in einem Überwachungsbereich.

Der Lichtvorhang kann nach dem Einweg-Lichtschrankenprinzip arbeiten, so dass die Sender an einem Rand des Überwachungsbereichs und die Empfänger am gegenüberliegenden Rand des Überwachungsbereichs angeordnet sind. Alternativ kann der Lichtvorhang nach dem Reflexionslichtschrankenprinzip arbeiten. In diesem Fall sind die Sender und Empfänger an einem ersten Rand des Überwachungsbereichs angeordnet, wobei am gegenüberliegenden zweiten Rand des Überwachungsbereichs ein Reflektor angeordnet ist.

Der Lichtvorhang kann insbesondere als Sicherheitssensor ausgebildet sein und kann damit in sicherheitstechnischen Applikationen, insbesondere im Bereich des Personenschutzes eingesetzt werden. Hierzu weist der Lichtvorhang einen fehlersicheren Aufbau auf, was durch eine redundant aufgebaute, vorzugsweise mehrkanalige Auswerteeinheit realisiert werden kann.

Die einzelnen Sender werden in einem vorgegebenen Zeittakt aktiviert. Insbesondere werden die Sender zyklisch einzeln nacheinander aktiviert. Der Takt der Aktivierung der Empfänger ist dabei vorteilhaft synchron zum Sendertakt, wobei vorteilhaft Sender und Empfänger optisch über Lichtstrahlen wenigstens eines der Sender synchronisiert werden.

Zur Aktivierung der Sender sind erfindungsgemäß Mittel zur Ansteuerung und Adressierung in Form einer Steuereinheit und einer Schieberegisterkette mit einer Anzahl von Schieberegisterelementen vorgesehen.

Der Grundgedanke der Erfindung besteht darin, die Schieberegisterelemente nicht derart zu verketten, dass der Ausgang eines Schieberegisterelements mit dem Eingang des nächsten Schieberegisterelements direkt verbunden ist. Vielmehr wird ein nachfolgendes Schieberegisterelement über den dem aktuellen Schieberegisterelement zugeordneten Sender oder einer Beschaltung dieses Senders mit dem jeweils nächsten Schieberegisterelement verkettet.

Bei dieser Art der Verkettung wird eine Information über den Sendestrom des jeweiligen Senders erhalten und in der Schiebekette weitergereicht, und diese derart weitergereichte Information kann vorzugsweise in der Steuereinheit mit dem Signalzustand des jeweiligen Schieberegisterelements in Beziehung gesetzt werden. Damit ist eine Funktionskontrolle der Schieberegisterkette möglich, wodurch die Funktionssicherheit des gesamten Lichtvorhangs erhöht wird.

Ein weiterer Vorteil besteht darin, dass zur Senderansteuerung nur wenige Bauteile benötigt werden, d.h. der konstruktive Aufwand des Lichtvorhangs kann gering-gehalten werden.

Besonders vorteilhaft erfolgt durch die erfindungsgemäße Verkettung der Schieberegisterelemente über die zugeordneten Sender oder deren Beschaltungen eine Fehlerkontrolle der Schieberegisterkette, die vorteilhaft in der Steuereinheit durchgeführt wird.

Insbesondere wird bei der Fehlerkontrolle geprüft, ob die Signalzustände der Schieberegisterkette fehlerhaft sind.

Vorteilhaft sind die möglichen Signalzustände der Schieberegisterelemente binäre Bitwerte 0 oder 1. Zur Aktivierung eines Senders gibt die Steuereinheit für das betreffende Schieberegisterelement den Bitwert 1 vor. Soll ein Sender nicht aktiviert werden, weist die Steuereinheit dem jeweiligen Schieberegisterelement den Bitwert 0 zu.

Im Fehlerfall, z.B. bedingt durch Kurzschlüsse, weisen Schieberegisterelemente falsche Bitwerte auf. Beispielsweise kann durch einen Kurzschluss ein Schieberegisterelement den Bitwert 1 aufweisen, obwohl diesem von der Steuereinheit der Bitwert 0 zugewiesen wurde. Dadurch kann es zu Fehlfunktionen des Lichtvorhangs, insbesondere fehlerhaften Aktivierungen oder Deaktivierungen von Sendern kommen.

Durch die erfindungsgemäße Verkettung der Schieberegisterelemente und die dadurch erhaltenen Informationen über die Senderströme können derartige Fehler aufgedeckt und Fehlfunktionen vermieden werden, beispielsweise dadurch, dass der Lichtvorhang in einen sicheren Zustand überführt wird, insbesondere abgeschaltet wird. Auch eine Ausgabe von Fehlermeldungen ist möglich.

Gemäß einer vorteilhaften Ausführungsform ist als Beschaltung eines Senders ein Ansteuerelement zur Ansteuerung dieses Senders vorhanden.

Dadurch dass die Beschaltung nur ein Ansteuerelement umfasst, wird eine Senderansteuerung mit besonders geringem Schaltungsaufwand realisiert.

Gemäß einer vorteilhaften Ausführungsform ist das Ausgangssignal des Senders der dessen Beschaltung, welcher oder welche dem letzten Schieberegisterelement oder Schieberegisterkette zugeordnet, zur Steuereinheit rückgeführt.

Anhand dieser rückgeführten Signale kann in der Steuereinheit eine Fehlerkontrolle der Schieberegisterkette durchgeführt werden.

Gemäß einer vorteilhaften Weiterbildung sind selektiv die Ausgangssignale von Sendern oder deren Beschaltungen, denen Schieberegisterelemente zugeordnet sind, zur Steuereinheit rückgeführt.

Zweckmäßig wird die Selektion in der Steuereinheit durchgeführt.

Weiter vorteilhaft wird die Selektion abhängig von in den Schieberegisterelementen vorhandenen Informationen durchgeführt.

Durch diese Selektion kann insbesondere durch die Steuereinheit gezielt vorgegeben werden, für welche Schieberegisterelemente eine Fehlerkontrolle erfolgen soll. Die Selektion kann dabei zeit- oder ereignisgesteuert erfolgen.

Gemäß einer vorteilhaften Ausführungsform der Erfindung sind Kaskaden von Sendern und zugeordneten Schieberegisterelementen vorhanden.

Die Steuereinheit kann für die Sender jeder Kaskade eine separate Zeitablaufsteuerung von Senderaktivierungen vorsehen, wobei die Steuereinheit auch die Senderaktivierungen in unterschiedlichen Kaskaden abstimmt. Beispielsweise kann die Zeitablaufsteuerung derart erfolgen, dass pro Kaskade immer nur ein Sender aktiviert ist, wobei jedoch die gleichzeitige Aktivierung von Sendern unterschiedlicher Kaskaden zulässig sein kann.

Vorteilhaft sind von jeder Kaskade Signale der Schieberegisterelemente oder der Beschaltungen der Sender über einen Rückkoppelpfad zur Steuereinheit rückgeführt.

Anhand der über den Rückkoppelpfad rückgeführten Signale kann für die einzelnen Kaskaden in der Steuereinheit eine Fehlerkontrolle der Schieberegisterelemente der Schieberegisterkette durchgeführt werden.

Besonders vorteilhaft ist für alle Kaskaden ein gemeinsamer Rückkoppelpfad vorhanden. Von den Kaskaden sind unterschiedliche Signale der Schieberegisterelemente oder der Beschaltungen der Sender dem Rückkoppelpfad zugeführt sind.

Dadurch, dass von den einzelnen Kaskaden unterschiedliche Signale in die Steuereinheit rückgeführt werden, kann in der Steuereinheit unterschieden werden, in welchen Kaskaden Fehlerzustände auftauchen.

Zweckmäßig werden von den Kaskaden Signale mit unterschiedlichen Spannungen oder Strömen in den Rückkoppelpfad eingekoppelt. In der Steuereinheit wird die Summe der Spannungen oder Ströme im Rückkoppelpfad ausgewertet.

Dann kann durch Auswertung der Summe der Spannungen oder Ströme im Rückkoppelpfad in der Steuereinheit eine Fehleranalyse der Schieberegisterelemente der Schieberegisterkette durchgeführt werden.

Gemäß einer ersten Variante ist jedem Schieberegisterelement genau ein Sender zugeordnet.

Dann aktiviert immer ein Schieberegisterelement nur den ihm zugeordneten Sender.

Gemäß einer zweiten Variante sind jedem Schieberegisterelement mehrere gemultiplexte Sender zugeordnet.

Ein Schieberegisterelement steuert dann mehrere Sender, wobei diese in einem Multiplexbetrieb einzeln nacheinander aktiviert werden.

Gemäß einer konstruktiv vorteilhaften Ausgestaltung sind die Schieberegisterelemente der Schieberegisterkette in wenigstens einem Gehäuse und/oder auf wenigstens einem Halbleitersubstrat angeordnet.

Insbesondere ist für jede Kaskade ein Gehäuse und/oder ein Halbleitersubstrat vorhanden.

Die Kaskaden sind dann modular ausgebildet.

Die Erfindung wird im Folgenden anhand der Zeichnungen erläutert. Es zeigen:
- Figur 1:: Schematische Darstellung eines Lichtvorhangs.
- Figur 2:: Blockschaltbild einer ersten Ausführungsform einer Sensoranordnung des Lichtvorhangs gemäß Figur 1.
- Figur 3:: Einzeldarstellung von Schieberegisterelementen, Ansteuerelementen und Sendern der Sensoranordnung gemäß Figur 2.
- Figur 4:: Variante der Anordnung gemäß Figur 4.
- Figur 5:: Variante der Anordnung gemäß Figur 4 mit einer gemultiplexten Ansteuerung vom Sender.
- Figur 6:: Blockschaltbild einer zweiten Ausführungsform einer Sensoranordnung des Lichtvorhangs gemäß Figur 1.

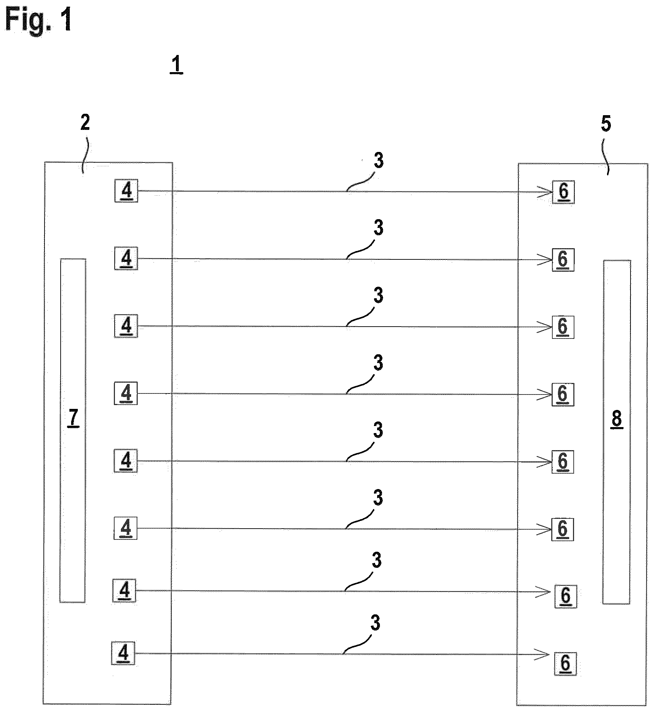

Figur 1 zeigt den prinzipiellen Aufbau eines Ausführungsbeispiels des erfindungsgemäßen Lichtvorhangs 1. Der Lichtvorhang 1 umfasst eine Sendereinheit 2, in deren Sendergehäuse eine Reihenanordnung von Lichtstrahlen 3 emittierenden Sendern 4 angeordnet ist, die als Leuchtdioden ausgebildet sein können. Der Lichtvorhang 1 weist weiterhin eine Empfängereinheit 5 auf, in deren Empfängergehäuse eine Reihenanordnung von Lichtstrahlen 3 empfangenden Empfängern 6 ist. Die Empfänger 6 sind beispielsweise von Foto-PIN-Dioden oder Foto-Dioden gebildet. Alternativ können auch Foto-Transistoren eingesetzt werden.

Die Sendereinheit 2 und die Empfangseinheit 5 sind an gegenüberliegenden Rändern eines Überwachungsbereichs angeordnet. Bei freiem Überwachungsbereich treffen die von jeweils einem Sender 4 emittierten Lichtstrahlen 3 auf einen zugeordneten, gegenüberliegenden Empfänger 6. Ein Sender 4 und der hierzu zugeordnete Empfänger 6 bilden jeweils eine Strahlachse. Der Senderbetrieb wird durch eine Senderansteuerung 7 in der Sendereinheit 2 gesteuert. Der Empfängerbetrieb wird durch eine Auswerteeinheit 8 in der Empfängereinheit 5 gesteuert und bewertet. Die Sender 4 und Empfänger 6 der einzelnen Strahlachsen werden durch eine optische oder leitungsgeführte Synchronisierung des Lichtvorhangs 1 zyklisch einzeln oder zu mehreren nacheinander aktiviert. Mit den parallel verlaufenden Lichtstrahlen 3 der Strahlachsen wird ein in einer Ebene verlaufender Überwachungsbereich überwacht.

In der Auswerteeinheit 8 werden hierzu die Empfangssignale der Empfänger 6 ausgewertet, um als Objektfeststellungssignal ein binäres Schaltsignal zu erzeugen. Der erste Schaltzustand entspricht einer Objektmeldung, der zweite Schaltzustand einem freien Überwachungsbereich.

Der Lichtvorhang 1 bildet zweckmäßig einen Sicherheitssensor für den Einsatz im Bereich der Sicherheitstechnik. Hierzu weist der Lichtvorhang 1 einen fehlersicheren Aufbau auf. Insbesondere weist die Auswerteeinheit 8 einen mehrkanaligen, redundanten Aufbau auf, beispielsweise in Form zweier sich zyklisch überwachender Rechnereinheiten.

Im vorliegenden Ausführungsbeispiel umfasst der Lichtvorhang 1 acht Sender 4 und Empfänger 6. Natürlich kann der Lichtvorhang 1 auch eine andere Anzahl von Sendern 4 und Empfängern 6 aufweisen. Prinzipiell kann der Lichtvorhang 1 auch als Reflexionslichtvorhang ausgebildet sein. In diesem Fall sind die Sender 4 und Empfänger 6 an einem ersten Rand des Überwachungsbereichs angeordnet. Am gegenüberliegenden Rand des Überwachungsbereichs befindet sich ein Reflektor. Bei freiem Überwachungsbereich werden die Lichtstrahlen 3 eines Senders 4 durch den Überwachungsbereich geführt, werden dann am Reflektor reflektiert und werden ein zweites Mal durch den Überwachungsbereich geführt, bevor sie auf den zugeordneten Empfänger 6 treffen.

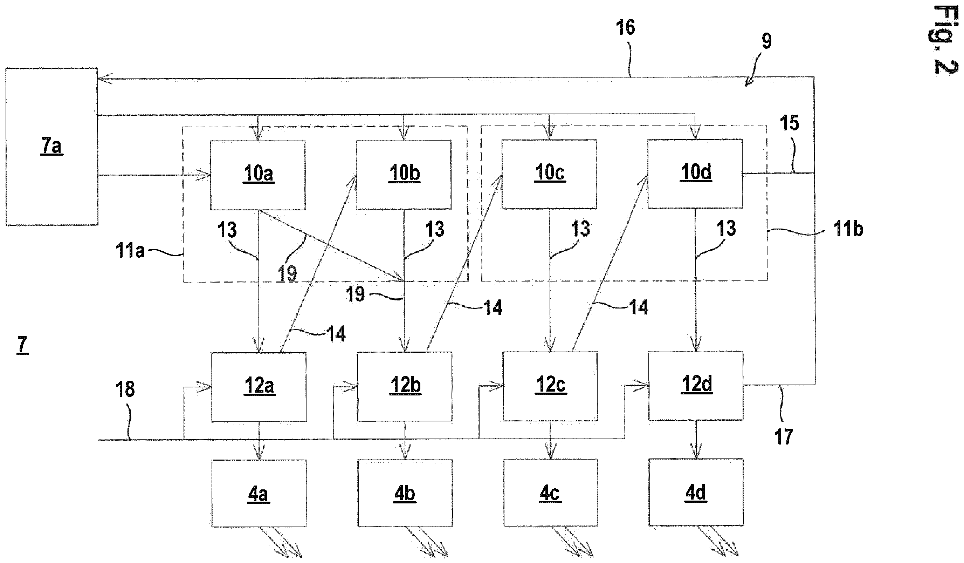

Figur 2 zeigt eine erste Ausführungsform einer Sensorsteuerung 7 für den Lichtvorhang 1 gemäß Figur 1. Figur 2 zeigt der Einfachheit halber eine Sensorsteuerung 7 für vier Sender 4a-4d, wobei natürlich auch eine andere Anzahl von Sendern 4a-4d vorgesehen sein kann.

Die Sensorsteuerung 7 umfasst eine Steuereinheit 7a und eine Schieberegisterkette 9 mit einer Anzahl von Schieberegisterelementen 10a-10d als Mittel zur Ansteuerung und Adressierung der Sender 4a-4d. Die Schieberegisterelemente 10a-10d sind paarweise in einzelnen Gehäusen 11a, 11b angeordnet, wobei dort die Schieberegisterelemente 10a-10d auf einzelnen, nicht dargestellten Halbleitersubstraten angeordnet sein können. Jedem Schieberegisterelement 10a-10d ist ein Ansteuerelement 12a-12d zugeordnet, das einen Sender 4a-4d ansteuert. Die Schieberegisterelemente 10a-10d können von Flip-Flops gebildet sein.

Die Schieberegisterelemente 10a-10d weisen binäre Signalzustände in Form von Bitwerten 0 oder 1 auf, die von der Steuereinheit 7a vorgegeben werden. Zur Aktivierung eines Sender 4a-4d gibt die Steuereinheit 7a für das jeweilige Schieberegisterelement 10a-10d den Bitwert 1 vor. Entsprechend sind Sender 4a-4d deaktiviert, wenn deren zugeordnete Schieberegisterelemente 10a-10d den Bitwert 0 aufweisen.

Erfindungsgemäß ist der Ausgang eines Schieberegisterelements 10a-10d mit dem nächsten Schieberegisterelement 10a-10d nicht direkt verkettet. Vielmehr ist ein Schieberegisterelement 10a-10d über das diesem zugeordnete Ansteuerelement 12a-12d mit dem nächsten Schieberegisterelement 10a-10d verkettet, wie durch die Leitungen 13, 14 veranschaulicht. Alternativ kann die Verkettung über die Sender 4a-4d selbst erfolgen.

Durch diese Art der Verkettung werden Informationen über die Senderströme der Sender 4a-4d erhalten. Diese Informationen können insbesondere in die Steuereinheit 7a für eine Fehlerkontrolle der Schieberegisterkette 9 verwendet werden.

Der Ausgang des letzten Schieberegisterelements 10d ist über eine Leitung 15 auf einen zur Steuereinheit 7a führenden Rückkoppelpfad 16 geführt. Weiterhin ist der Ausgang des letzten Ansteuerelements 12a über eine Leitung 17 auf den Rückkoppelpfad 16 geführt. Durch die Rückführung der jeweiligen Signale über den Rückkoppelpfad 16 wird in der Steuereinheit 7a eine Fehlerkontrolle der Schieberegisterkette 9 ermöglicht.

Im fehlerfreien Fall werden die Sender 4a-4d zyklisch einzeln nacheinander aktiviert, in dem durch die Steuereinheit 7a die Schieberegisterkette 9 so gesteuert wird, dass immer nur ein Schieberegisterelement 10a-10d den Bitwert 1 aufweist, die anderen Schieberegisterelemente 10a-10d den Bitwert 0 ausweisen.

Die Ansteuerelemente 12a-12d werden über eine Modulationsleitung 18 angesteuert, so dass die Sender 4a-4d moduliertes Licht, insbesondere in Form von Lichtimpulsen emittieren. Die Modulation kann über die Steuereinheit 7a oder eine separate Einheit erfolgen. Durch die Modulation werden den Lichtstrahlen 3 Kodierungen aufgeprägt.

In Figur 2 ist ein Fehlerfall derart dargestellt, dass ein Schluss 19 zwischen den Ansteuerelementen 12a-12d vorhanden ist, was zu einer fehlerhaften, gleichzeitigen Aktivierung der Sender 4a, 4b führt.

Durch die erfindungsgemäße Verkettung benachbarter Schieberegisterelemente 10a-10d über ein Ansteuerelement 12a-12d und die Rückführung von Signalen über den Rückkoppelpfad 16 kann dieser Fehler in der Steuereinheit 7a aufgedeckt werden, so dass dort entsprechende Gegenmaßnahmen eingeleitet werden können.

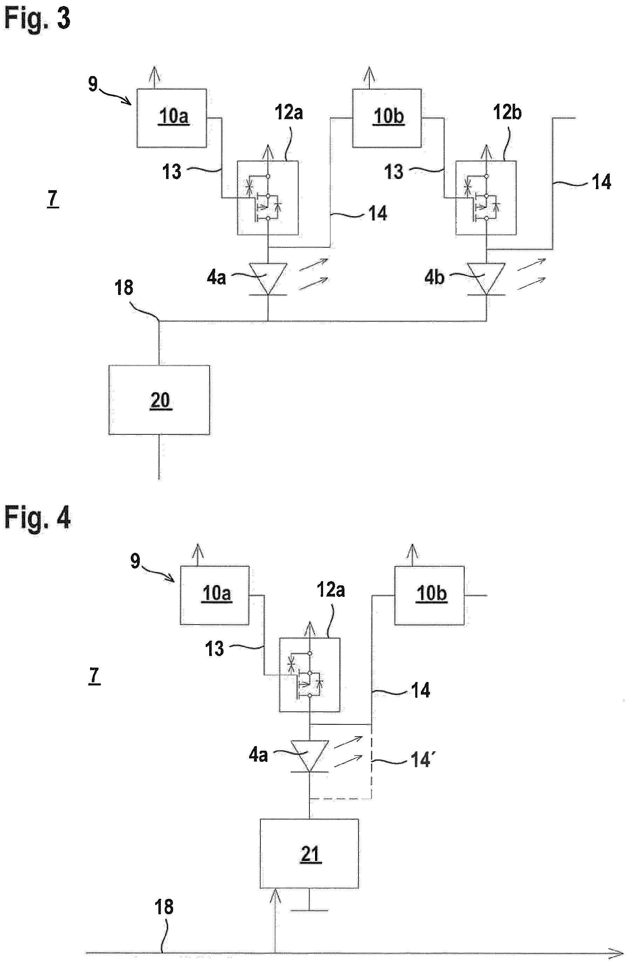

Figur 3 zeigt eine vergrößerte Teildarstellung der Sensoranordnung gemäß Figur 2 mit einer ersten Variante einer Modulation der Sender 4a-4d.

Figur 3 zeigt zwei Schieberegisterelemente 10a-10d mit dem jeweils zugeordneten Ansteuerelement 12a-12d und Sender 4a-4d. Die Verkettung eines Schieberegisterelements 10a zum nächsten Schieberegisterelement 10b erfolgt über das Ansteuerelement 12a über die Leitungen 13, 14.

Die Modulation der Lichtstrahlen 3 der Sender 4a-4d erfolgt über einen gemeinsamen Versorgungsspannungsanschluss 20.

Figur 4 zeigt eine vergrößerte Teildarstellung der Sensoranordnung gemäß Figur 2 mit einer zweiten Modulation der Sender 4a-4d. In diesem Fall ist für jeden Sender 4a-4d ein Modulator 21 vorgesehen, der über die Modulationsleitung 18 angesteuert wird.

Wird das Ansteuerelement 12a mit dem Schieberegisterelement 10a angesteuert und dadurch der Sender 4a aktiviert, fällt am Widerstand des Sender 4a-4d eine Spannung ab (gestrichelte Linie 14') die vom nachfolgenden Schieberegisterelement 10b übernommen wird.

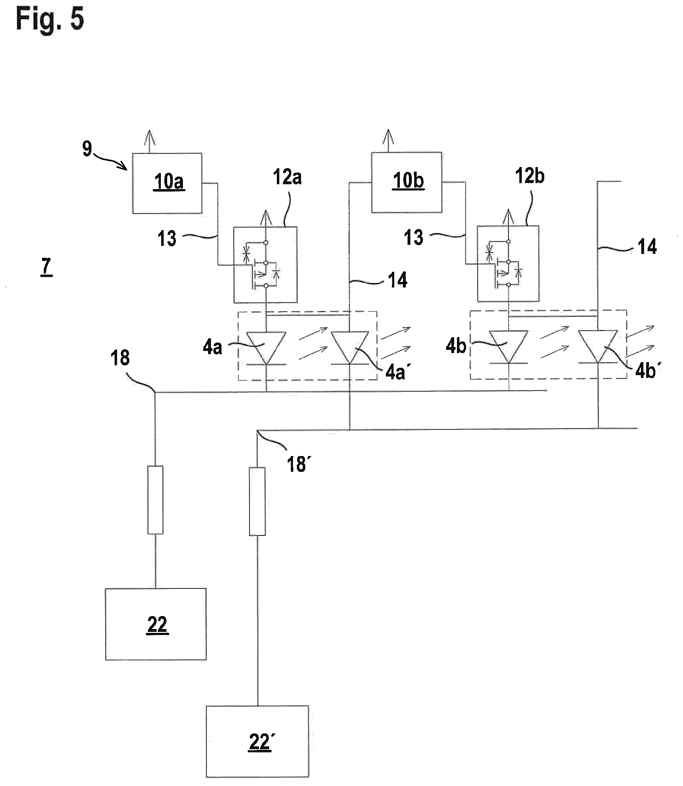

Figur 5 zeigt in vergrößerter Teildarstellung eine Variante der Sensoranordnung gemäß Figur 2. Analog zur Ausführungsform gemäß Figur 2 ist auch bei der Ausführungsform der Figur 5 jedem Schieberegisterelement 10a, 10b der Schieberegisterkette 9 ein Ansteuerelement 12a, 12b zugeordnet. Im Unterschied zu der Ausführungsform gemäß Figur 2 sind bei der Ausführungsform gemäß Figur 5 jedem Ansteuerelement 12a, 12b zwei Sender 4a, 4a' bzw. 4b, b' zugeordnet. Über ein Schieberegisterelement 10a, 10b wird das zugehörige Ansteuerelement 12a, 12b angesteuert, wodurch die beiden Sender 4a, 4a' bzw. 4b, 4b' aktiviert werden und in einem Multiplexbetrieb nacheinander Lichtstrahlen 3 emittieren.

Die Modulation der Lichtstrahlen 3 der Sender 4a, 4b erfolgt über einen ersten Modulator 22 und eine Modulationsleitung 18. Die Modulation der Lichtstrahlen 3 der Sender 4a', 4b' erfolgt über einen zweiten Modulator 22 und eine Modulationsleitung 18'.

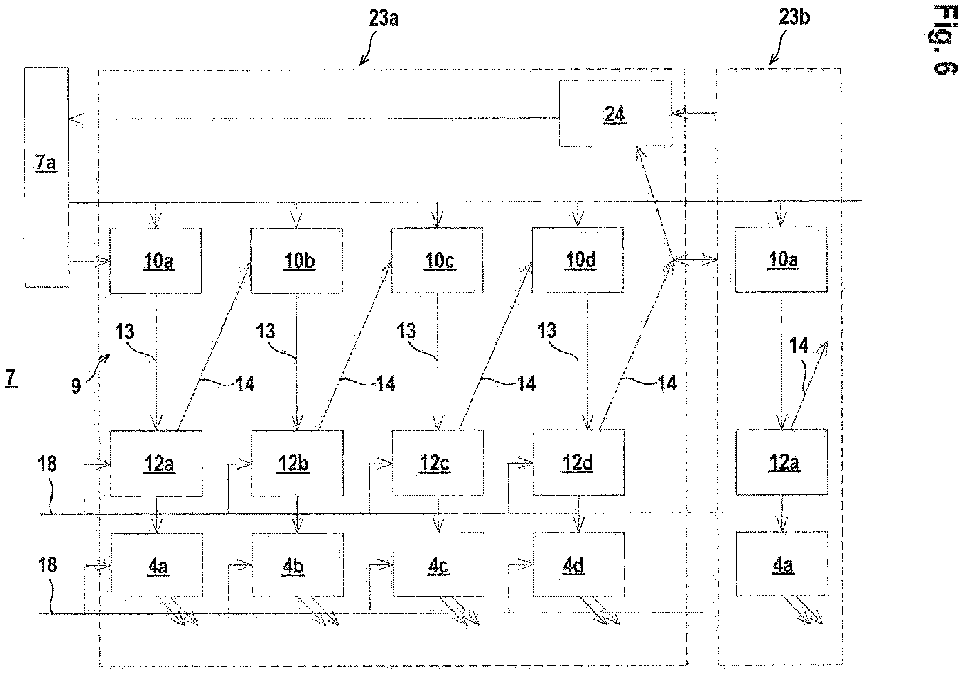

Figur 6 zeigt ein weiteres Ausführungsbeispiel einer Sensorsteuerung 7 für den Lichtvorhang 1 gemäß Figur 1.

Bei dieser Ausführungsform sind mehrere Kaskaden 23a, 23b vorgesehen, wobei in Figur 6 nur die erste Kaskade 23a vollständig und die zweite Kaskade 23b nur teilweise dargestellt sind. Die Anzahl der Kaskaden 23a, 23b kann variabel gewählt werden. Im vorliegenden Fall weist jede Kaskade 23a, 23b eine Anordnung mit vier Schieberegisterelementen 10a-10d, vier Ansteuerelemente 12a-12d und vier Sender 4a-4d auf, deren Aufbau der Anordnung gemäß Figur 2 entspricht. Dies ist jedoch nicht zwingend.

Die Steuereinheit 7a steuert wieder die gesamte Schieberegisterkette 9 und aktiviert dadurch zeitlich nacheinander einzeln die Sender 4a-4d jeder Kaskade 23a, 23b. Sender 4a-4d unterschiedlicher Kaskaden 23a, 23b können ggf. gleichzeitig aktiviert werden.

Die Verkettung der Schieberegisterelemente 10a-10d einer Kaskade 23a, 23b erfolgt analog zur Ausführungsform der Figur 2. Die Verkettung des letzten Schieberegisterelements 10d einer Kaskade 23a mit dem ersten Schieberegisterelement 10a der nächsten Kaskade 23b erfolgt analog zu den Schieberegisterelementen 10a-10d innerhalb einer Kaskade 23a, 23b mittels der über ein Ansteuerelement 12d geführten Leitungen 13, 14.

Der Ausgang des letzten Schieberegisterelements 10d einer Kaskade 23a oder 23b ist auf ein Rückführelement 24 geführt, das die Einkopplung rückgeführter Signale in den Rückkoppelpfad 16 übernimmt.

Mit den Rückführelementen 24 werden die von den einzelnen Kaskaden 23a, 23b rückgeführten Signale kombiniert. Durch die Rücksendung von Signalen pro Kaskade 23a, 23b liegen Informationen über Fehlerzustände schneller in der Steuereinheit 7a vor.

Vorteilhaft werden von den Kaskaden 23a, 23b Signale mit unterschiedlichen Spannungen oder Strömen in den Rückkoppelpfad 16 eingekoppelt. In der Steuereinheit 7a wird die Summe der Spannungen oder Ströme im Rückkoppelpfad 16 ausgewertet.

Dann wird durch Auswertung der Summe der Spannungen oder Ströme im Rückkoppelpfad 16 in der Steuereinheit 7a eine Fehleranalyse der Schieberegisterelemente 10a-10d der Schieberegisterkette 9 durchgeführt.

### Bezugszeichenliste

- (1): Lichtvorhang
- (2): Sendereinheit
- (3): Lichtstrahl
- (4): Sender
- (4a-4d): Sender
- (4a'): Sender
- (4b'): Sender
- (5): Empfängereinheit
- (6): Empfänger
- (7): Sendersteuerung
- (7a): Steuereinheit
- (8): Auswerteeinheit
- (9): Schieberegisterkette
- (10a-10d): Schieberegisterelement
- (11a, 11b): Gehäuse
- (12a-12d): Ansteuerelement
- (13): Leitung
- (14): Leitung
- (14'): gestrichelte Linie
- (15): Leitung
- (16): Rückkoppelpfad
- (17): Leitung
- (18): Modulationsleitung
- (18'): Modulationsleitung
- (19): Schluss
- (20): Versorgungsspannungsanschluss
- (21): Modulator
- (22): Modulator
- (22'): Modulator
- (23a, 23b): Kaskaden
- (24): Rückführelement

## Patentansprüche

1. Lichtvorhang (1) zur Erfassung von Objekten in einem Überwachungsbereich, mit einer Anordnung von Lichtstrahlen (3) emittierenden Sendern (4a-4d) und einer Anordnung von Lichtstrahlen (3) empfangenden Empfängern (6), wobei jedem Sender (4a-4d) ein Empfänger (6) derart zugeordnet ist, dass bei freiem Überwachungsbereich die Lichtstrahlen (3) des zugeordneten Senders (4a-4d) auf diesen Empfänger (6) treffen, und dass bei einem Objekteingriff die Lichtstrahlen (3) wenigstens eines Senders (4a-4d) zumindest teilweise unterbrochen sind, und mit einer Auswerteeinheit (8) zur Generierung eines Objektfeststellungssignals in Abhängigkeit von an den Ausgängen der Empfänger (6) anstehenden Empfangssignalen, **dadurch gekennzeichnet, dass** als Mittel zur Ansteuerung und Adressierung der Sender (4a-4d) eine Steuereinheit (7a) und eine Schieberegisterkette (9) mit Schieberegisterelementen (10a-10d), welchen jeweils wenigstens ein Sender (4a-4d) zugeordnet ist, vorhanden ist, wobei jeweils ein Schieberegisterelement (10a-10d) über den diesem zugeordneten Sender (4a-4d) oder eine Beschaltung dieses Senders (4a-4d) mit dem nächsten Schieberegisterelement (10a-10d) verkettet ist.

2. Lichtvorhang (1) nach Anspruch 1, **dadurch gekennzeichnet, dass** durch Verkettung eines Schieberegisterelements (10a-10d) über den zugeordneten Sender (4a-4d) oder eine Beschaltung dieses Senders (4a-4d) an ein benachbartes Schieberegisterelement (10a-10d) eine Information über den Sendestrom dieses Senders (4a-4d) erhalten wird, die für eine Fehlerkontrolle der Schieberegisterkette (9) verwendet wird.

3. Lichtvorhang (1) nach einem der Ansprüche 1 oder 2, **dadurch gekennzeichnet, dass** als Beschaltung eines Senders (4a-4d) ein Ansteuerelement (12a-12d) zur Ansteuerung dieses Senders (4a-4d) vorhanden ist.

4. Lichtvorhang (1) nach einem der Ansprüche 1 bis 3, **dadurch gekennzeichnet, dass** das Ausgangssignal des Senders (4a-4d) oder dessen Beschaltung, welcher oder welche dem letzten Schieberegisterelement (10a-10d) der Schieberegisterkette (9) zugeordnet ist, zur Steuereinheit (7a) rückgeführt ist.

5. Lichtvorhang (1) nach einem der Ansprüche 1 bis 4, **dadurch gekennzeichnet, dass** selektiv die Ausgangssignale von Sendern (4a-4d) oder deren Beschaltungen, denen Schieberegisterelemente (10a-10d) zugeordnet sind, zur Steuereinheit (7a) rückgeführt sind.

6. Lichtvorhang (1) nach Anspruch 5, **dadurch gekennzeichnet, dass** die Selektion in der Steuereinheit (7a) durchgeführt wird.

7. Lichtvorhang (1) nach Anspruch 6, **dadurch gekennzeichnet, dass** die Selektion abhängig von in den Schieberegisterelementen (10a-10d) vorhandenen Informationen durchgeführt wird.

8. Lichtvorhang (1) nach einem der Ansprüche 1 bis 7, **dadurch gekennzeichnet, dass** Kaskaden (23a, 23b) von Sendern (4a-4d) und zugeordneten Schieberegisterelementen (10a-10d) vorhanden sind.

9. Lichtvorhang (1) nach einem der Ansprüche 1 bis 8, **dadurch gekennzeichnet, dass** von jeder Kaskade (23a, 23b) Signale der Schieberegisterelemente (10a-10d) oder der Beschaltungen der Sender (4a-4d) über einen Rückkoppelpfad (16) zur Steuereinheit (7a) rückgeführt sind.

10. Lichtvorhang (1) nach Anspruch 9, **dadurch gekennzeichnet, dass** für alle Kaskaden (23a, 23b) ein gemeinsamer Rückkoppelpfad (16) vorhanden ist, und dass von den Kaskaden (23a, 23b) unterschiedliche Signale der Schieberegisterelemente (10a-10d) oder der Beschaltungen der Sender (4a-4d) dem Rückkoppelpfad (16) zugeführt sind.

11. Lichtvorhang (1) nach Anspruch 10, **dadurch gekennzeichnet, dass** von den Kaskaden (23a, 23b) Signale mit unterschiedlichen Spannungen oder Strömen in den Rückkoppelpfad (16) eingekoppelt werden, und dass in der Steuereinheit (7a) die Summe der Spannungen oder Ströme im Rücckoppelpfad (16) ausgewertet wird.

12. Lichtvorhang (1) nach einem der Ansprüche 1 bis 11, **dadurch gekennzeichnet, dass** in der Steuereinheit (7a) eine Fehleranalyse der Schieberegisterelemente (10a-10d) der Schieberegisterkette (9) durchgeführt wird.

13. Lichtvorhang (1) nach einem der Ansprüche 11 und 12, **dadurch gekennzeichnet, dass** durch Auswertung der Summe der Spannungen oder Ströme im Rückkoppelpfad (16) in der Steuereinheit (7a) eine Fehleranalyse der Schieberegisterelemente (10a-10d) der Schieberegisterketten (9) durchgeführt wird.

14. Lichtvorhang (1) nach einem der Ansprüche 1 bis 13, **dadurch gekennzeichnet, dass** in jedem Schieberegisterelement (10a-10d) ein Bitwert 0 oder 1 vorhanden ist.

15. Lichtvorhang (1) nach einem der Ansprüche 12 und 14, **dadurch gekennzeichnet, dass** mit der Fehleranalyse fehlerhafte Bitwerte von Schieberegisterelementen (10a-10d) aufgedeckt werden.

16. Lichtvorhang (1) nach einem der Ansprüche 1 bis 15, **dadurch gekennzeichnet, dass** jedem Schieberegisterelement (lOa-lOd) genau ein Sender (4a-4d) zugeordnet ist.

17. Lichtvorhang (1) nach einem der Ansprüche 1 bis 15, **dadurch gekennzeichnet, dass** jedem Schieberegisterelement (10a-10d) mehrere gemultiplexte Sender (4a, 4a', 4b, 4b') zugeordnet sind.

18. Lichtvorhang (1) nach einem der Ansprüche 1 bis 17, **dadurch gekennzeichnet, dass** Schieberegisterelemente (10a-10d) der Schieberegisterketten (9) in wenigstens einem Gehäuse (11a, 11b) und/oder auf wenigstens einem Halbleitersubstrat angeordnet sind.

19. Lichtvorhang (1) nach einem der Ansprüche 8 und 18, **dadurch gekennzeichnet, dass** für jede Kaskade (23a, 23b) ein Gehäuse (11a, 11b) und/oder ein Halbleitersubstrat vorhanden ist.

20. Lichtvorhang (1) nach einem der Ansprüche 1 bis 10, **dadurch gekennzeichnet, dass** dieser ein Sicherheitssensor ist.

## Geänderte Patentansprüche

### Geänderte Patentansprüche gemäss Regel 137(2) EPÜ.

1. Lichtvorhang (1) zur Erfassung von Objekten in einem Überwachungsbereich, mit einer Anordnung von Lichtstrahlen (3) emittierenden Sendern (4a-4d) und einer Anordnung von Lichtstrahlen (3) empfangenden Empfängern (6), wobei jedem Sender (4a-4d) ein Empfänger (6) derart zugeordnet ist, dass bei freiem Überwachungsbereich die Lichtstrahlen (3) des zugeordneten Senders (4a-4d) auf diesen Empfänger (6) treffen, und dass bei einem Objekteingriff die Lichtstrahlen (3) wenigstens eines Senders (4a-4d) zumindest teilweise unterbrochen sind, und mit einer Auswerteeinheit (8) zur Generierung eines Objektfeststellungssignals in Abhängigkeit von an den Ausgängen der Empfänger (6) anstehenden Empfangssignalen, **dadurch gekennzeichnet, dass** als Mittel zur Ansteuerung und Adressierung der Sender (4a-4d) eine Steuereinheit (7a) und eine Schieberegisterkette (9) mit Schieberegisterelementen (10a-10d), welchen jeweils wenigstens ein Sender (4a-4d) zugeordnet ist, vorhanden ist, wobei jeweils ein Schieberegisterelement (10a-10d) über den diesem zugeordneten Sender (4a-4d) oder eine Beschaltung dieses Senders (4a-4d) mit dem nächsten Schieberegisterelement (10a-10d) verkettet ist.

2. Lichtvorhang (1) nach Anspruch 1, **dadurch gekennzeichnet, dass** durch Verkettung eines Schieberegisterelements (10a-10d) über den zugeordneten Sender (4a-4d) oder eine Beschaltung dieses Senders (4a-4d) an ein benachbartes Schieberegisterelement (10a-10d) eine Information über den Sendestrom dieses Senders (4a-4d) erhalten wird, die für eine Fehlerkontrolle der Schieberegisterkette (9) verwendet wird.

3. Lichtvorhang (1) nach einem der Ansprüche 1 oder 2, **dadurch gekennzeichnet, dass** als Beschaltung eines Senders (4a-4d) ein Ansteuerelement (12a-12d) zur Ansteuerung dieses Senders (4a-4d) vorhanden ist.

4. Lichtvorhang (1) nach einem der Ansprüche 1 bis 3, **dadurch gekennzeichnet, dass** das Ausgangssignal des Senders (4a-4d) oder dessen Beschaltung, welcher oder welche dem letzten Schieberegisterelement (10a-10d) der Schieberegisterkette (9) zugeordnet ist, zur Steuereinheit (7a) rückgeführt ist.

5. Lichtvorhang (1) nach einem der Ansprüche 1 bis 4, **dadurch gekennzeichnet, dass** selektiv die Ausgangssignale von Sendern (4a-4d) oder deren Beschaltungen, denen Schieberegisterelemente (10a-10d) zugeordnet sind, zur Steuereinheit (7a) rückgeführt sind.

6. Lichtvorhang (1) nach Anspruch 5, **dadurch gekennzeichnet, dass** die Selektion in der Steuereinheit (7a) durchgeführt wird.

7. Lichtvorhang (1) nach Anspruch 6, **dadurch gekennzeichnet, dass** die Selektion abhängig von in den Schieberegisterelementen (10a-10d) vorhandenen Informationen durchgeführt wird.

8. Lichtvorhang (1) nach einem der Ansprüche 1 bis 7, **dadurch gekennzeichnet, dass** Kaskaden (23a, 23b) von Sendern (4a-4d) und zugeordneten Schieberegisterelementen (10a-10d) vorhanden sind.

9. Lichtvorhang (1) nach Anspruch 8, **dadurch gekennzeichnet, dass** von jeder Kaskade (23a, 23b) Signale der Schieberegisterelemente (10a-10d) oder der Beschaltungen der Sender (4a-4d) über einen Rückkoppelpfad (16) zur Steuereinheit (7a) rückgeführt sind.

10. Lichtvorhang (1) nach Anspruch 9, **dadurch gekennzeichnet, dass** für alle Kaskaden (23a, 23b) ein gemeinsamer Rückkoppelpfad (16) vorhanden ist, und dass von den Kaskaden (23a, 23b) unterschiedliche Signale der Schieberegisterelemente (10a-10d) oder der Beschaltungen der Sender (4a-4d) dem Rückkoppelpfad (16) zugeführt sind.

11. Lichtvorhang (1) nach Anspruch 10, **dadurch gekennzeichnet, dass** von den Kaskaden (23a, 23b) Signale mit unterschiedlichen Spannungen oder Strömen in den Rückkoppelpfad (16) eingekoppelt werden, und dass in der Steuereinheit (7a) die Summe der Spannungen oder Ströme im Rücckoppelpfad (16) ausgewertet wird.

12. Lichtvorhang (1) nach einem der Ansprüche 1 bis 11, **dadurch gekennzeichnet, dass** in der Steuereinheit (7a) eine Fehleranalyse der Schieberegisterelemente (10a-10d) der Schieberegisterkette (9) durchgeführt wird.

13. Lichtvorhang (1) nach einem der Ansprüche 11 und 12, **dadurch gekennzeichnet, dass** durch Auswertung der Summe der Spannungen oder Ströme im Rückkoppelpfad (16) in der Steuereinheit (7a) eine Fehleranalyse der Schieberegisterelemente (10a-10d) der Schieberegisterketten (9) durchgeführt wird.

14. Lichtvorhang (1) nach einem der Ansprüche 1 bis 13, **dadurch gekennzeichnet, dass** in jedem Schieberegisterelement (10a-10d) ein Bitwert 0 oder 1 vorhanden ist.

15. Lichtvorhang (1) nach einem der Ansprüche 12 oder 13, **dadurch gekennzeichnet, dass** mit der Fehleranalyse fehlerhafte Bitwerte von Schieberegisterelementen (10a-10d) aufgedeckt werden.

16. Lichtvorhang (1) nach einem der Ansprüche 1 bis 15, **dadurch gekennzeichnet, dass** jedem Schieberegisterelement (10a-10d) genau ein Sender (4a-4d) zugeordnet ist.

17. Lichtvorhang (1) nach einem der Ansprüche 1 bis 15, **dadurch gekennzeichnet, dass** jedem Schieberegisterelement (10a-10d) mehrere gemultiplexte Sender (4a, 4a', 4b, 4b') zugeordnet sind.

18. Lichtvorhang (1) nach einem der Ansprüche 1 bis 17, **dadurch gekennzeichnet, dass** Schieberegisterelemente (10a-10d) der Schieberegisterketten (9) in wenigstens einem Gehäuse (11a, 11b) und/oder auf wenigstens einem Halbleitersubstrat angeordnet sind.

19. Lichtvorhang (1) nach einem der Ansprüche 8 und 18, **dadurch gekennzeichnet, dass** für jede Kaskade (23a, 23b) ein Gehäuse (11a, 11b) und/oder ein Halbleitersubstrat vorhanden ist.

20. Lichtvorhang (1) nach einem der Ansprüche 1 bis 10, **dadurch gekennzeichnet, dass** dieser ein Sicherheitssensor ist.
